# EUROPÄISCHE PATENTSCHRIFT

(11) **EP 3 123 828 B1**
(45) Veröffentlichungstag und Bekanntmachung des Hinweises auf die Patenterteilung: **20.11.2019**
(21) Anmeldenummer: 15709473.1
(22) Anmeldetag: 11.03.2015
(51) Int. Cl.: H05B 37/02

(54) **BETRIEBSGERÄT FÜR LEUCHTMITTEL ZUR ÜBERTRAGUNG VON INFORMATIONEN**
OPERATING DEVICE FOR LAMPS FOR TRANSMITTING INFORMATION
APPAREIL DE SERVICE D'ÉLÉMENTS LUMINESCENTS POUR LE TRANSFERT D'INFORMATIONS

(30) Priorität: 27.03.2014 DE 102014205746
(43) Veröffentlichungstag der Anmeldung: 01.02.2017
(73) Patentinhaber: Tridonic GmbH & Co. KG, 6851 Dornbirn (AT)
(72) Erfinder: LOCHMANN, Frank, 88147 Esseratsweiler (DE); MARTE, Patrick, A-6840 Götzis (AT); BACHMANN, Johannes, A-6840 Götzis (AT)
(74) Vertreter: Rupp, Christian
(86) Internationale Anmeldenummer: PCT/EP2015/055008
(87) Internationale Veröffentlichungsnummer: WO 2015/144430

(56) Entgegenhaltungen:
- US-A1- 2011 222 595
- US-A1- 2011 222 595

## Beschreibung

Die vorliegende Erfindung bezieht sich auf die Übertragung von Informationen bzw. Daten ausgehend von einem Betriebsgerät für Leuchtmittel. Die Erfindung betrifft insbesondere ein Verfahren zur Übertragung von Informationen, ein Betriebsgerät zur Übertragung von Informationen, sowie ein entsprechendes Beleuchtungssystem.

Als Beispiel für eine Datenübertragung im Bereich von Betriebsgeräten für Leuchtmittel sind bereits Betriebsgeräte für elektrische Lampen bekannt, die einen z.B. mit einem Datenbus gekoppelten Steuersignaleingang aufweisen, über den das Betriebsgerät digitale Steuersignale zur Steuerung der elektrischen Lampen empfängt.

Zur Übertragung von Informationen ausgehend vom Betriebsgerät ist es weiterhin bekannt, dass das Betriebsgerät über vorgesehene Datenleitungen bzw. über einen Datenbus unterschiedliche Informationen an eine Steuereinheit zurücksenden kann. Zusätzlich zu diesen Datenleitungen sind noch separate Spannungsversorgungsleitungen zum Versorgen des Betriebsgeräts mit Spannung vorgesehen.

Bekannt ist außerdem die Übertragung von Daten über das Stromnetz. Bei dieser Technologie, auch Powerline Communication (PLC) benannt, wird die Trägerfrequenz der Netzspannung mit einem hochfrequenten Signal moduliert. Betriebsgeräte, die innerhalb eines Gebäudes am Stromnetz angeschlossen sind, können somit über die im Gebäude verlegten Stromleitungen durch Demodulation Signale ausgehend von einer Steuereinheit empfangen.

Die Veröffentlichung US20110222595A1 offenbart ein Übertragungsverfahren auf AC-Spannungsversorgungsleitungen des Stands der Technik.

Der vorliegenden Erfindung liegt nunmehr die Aufgabe zugrunde, ein alternatives System anzugeben, bzw. ein System zur Übertragung von Information ausgehend von einem Betriebsgerät für Leuchtmittel hin zu einer mit dem Betriebsgerät über dessen Spannungsversorgungleitungen verbundenen Steuereinheit.

Die Erfindung zielt insbesondere darauf, ohne zusätzliche Busleitung oder anderem Kommunikationskanal von einem Betriebsgerät in Form von z.B. eines Leuchtmittelkonverters, insbesondere eines LED-Konverters, Information zu übertragen, welche Information beispielsweise einen die Lichtleistung betreffenden Parameter - wie LED-Strom oder Dimmwert - betreffen kann.

Gemäß einem ersten Aspekt der Erfindung ist ein Verfahren vorgesehen zur Übertragung von Information von einem Betriebsgerät für Leuchtmittel, insbesondere einem Konverter für LEDs, hin zu einer mit dem Betriebsgerät über dessen Spannungsversorgungleitungen verbundenen Steuereinheit. Das Verfahren weist mehrere Schritte auf. Die Steuereinheit unterbricht vorzugsweise periodisch zeitweise eine AC-Versorgungsspannung des Betriebsgeräts. Das Betriebsgerät beaufschlagt die Spannungsversorgungsleitungen während der Unterbrechung der AC-Versorgungsspannung mit einem Spannungssignal, das von der Steuereinheit als Information ausgewertet wird.

Gemäß einem weiteren Aspekt der Erfindung ist ein Verfahren vorgesehen zum Abruf von Information von einem Betriebsgerät für Leuchtmittel, insbesondere einem Konverter für LEDs, hin zu einer mit dem Betriebsgerät über dessen Spannungsversorgungleitungen verbundenen Steuereinheit. Das Verfahren weist mehrere Schritte auf. Die Steuereinheit unterbricht durch Phasenabschnitt- oder -anschnitt zeitweise eine AC-Versorgungsspannung des Betriebsgeräts. Als Antwort darauf sendet das Betriebsgerät Informationen an die Steuereinheit.

Gemäß einem weiteren Aspekt der Erfindung ist ein Betriebsgerät für Leuchtmittel vorgesehen, insbesondere einem Konverter für LEDs. Das Betriebsgerät ist zur Übertragung von Information hin zu einer mit dem Betriebsgerät über dessen Spannungsversorgungleitungen verbundenen Steuereinheit ausgebildet. Das Betriebsgerät weist Mittel auf zur Erkennung, dass die AC-Versorgungsspannung des Betriebsgeräts vorzugsweise periodisch zeitweise unterbrochen ist. Das Betriebsgerät weist Mittel auf zur Beaufschlagung der Spannungsversorgungsleitungen mit einem Spannungssignal während der Unterbrechung der AC-Versorgungsspannung.

Gemäß einem weiteren Aspekt der Erfindung ist ein System vorgesehen. Das System weist auf ein derartiges Betriebsgerät sowie eine damit über Spannungsversorgungleitungen verbundene Steuereinheit.

Die Steuereinheit kann vorzugsweise die Versorgungsspannung durch Phasenanschnitt oder Phasenabschnitt unterbrechen.

Die Informationsübertragung kann vorzugsweise von dem Betriebsgerät zu der Steuereinheit digital codiert übertragen werden, indem das Betriebsgerät die Spannungsversorgungsleitungen während der Unterbrechung der AC-Versorgungsspannung selektiv mit zwei diskret verschiedenen Spannungssignalen beaufschlagt.

Die zeitweise Unterbrechung der AC-Versorgungsspannung kann vorzugsweise das Betriebsgerät im Sinne eines Polling-Befehls zur Sendung von Information an die Steuereinheit interpretieren.

Das Betriebsgerät kann vorzugsweise das Beaufschlagen der Spannungsversorgungsleitungen ausgehend von einer DC-Spannung in dem Betriebsgerät ausführen.

Das Betriebsgerät kann vorzugsweise das Beaufschlagen der Spannungsversorgungsleitungen unter Verwendung eines galvanisch getrennten Übertragers ausführen, in dem eine Primärseite des Übertragers geschaltet wird und die Sekundärseite des Übetragers mit den Spannungsversorgungsleitungen verbunden ist.

Weitere Merkmale, Vorteile und Funktionen von Ausführungsbeispielen der Erfindung werden aus der nachfolgenden detaillierten Beschreibung anhand der beigefügten Zeichnungen ersichtlich sein.
Fig. 1 zeigt eine schematische Darstellung eines Beleuchtungssystems gemäß einem Ausführungsbeispiel der vorliegenden Erfindung.
Fig. 2 zeigt den zeitlichen Verlauf von Spannungswerten des erfindungsgemäßen Beleuchtungssystems.

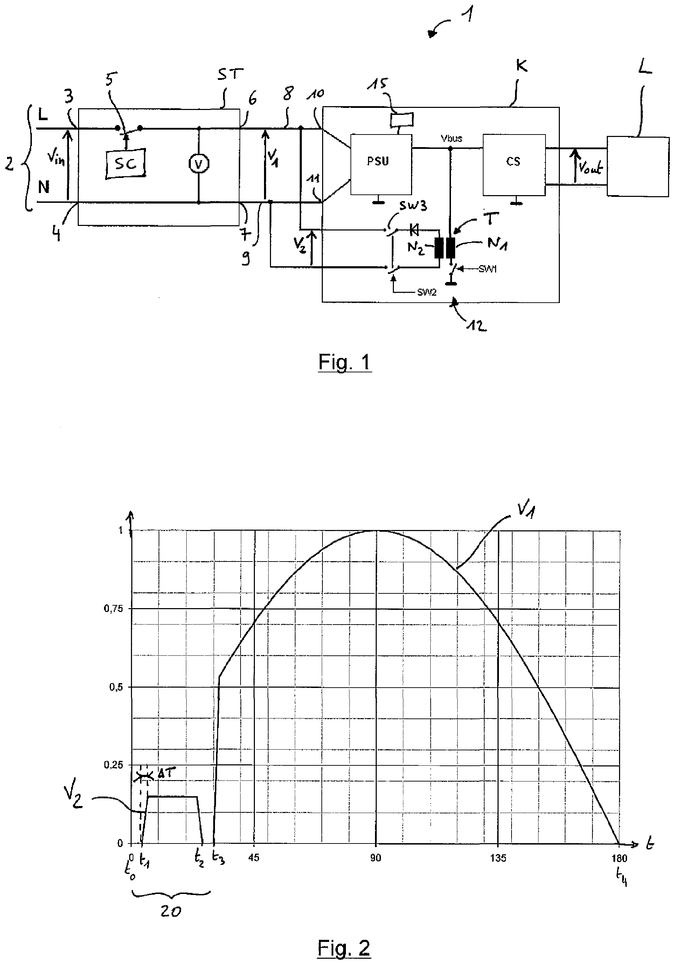

In Fig. 1 ist eine schematische Darstellung eines Ausführungsbeispiels eines Beleuchtungssystems 1 gemäß der vorliegenden Erfindung gezeigt.

Das System 1 umfasst drei Hauptelemente, nämlich eine Steuereinheit ST, einen Konverter K und ein LED-Modul L. Die Steuereinheit ST ist mit einem Versorgungsnetz 2 verbunden. Entsprechende Eingangsanschlüsse 3, 4 der Steuereinheit ST sind zum Anschließen an das Versorgungsnetz 2 vorgesehen. Diese Eingangsanschlüsse 3, 4 sind jeweils mit dem Nullleiter bzw. Neutralleiter N und dem Phasenleiter L des Versorgungsnetzes 2 anschließbar. Das Versorgungsnetz 2 bildet eine Wechselspannungsquelle, so dass an den Eingangsanschlüssen 3, 4 eine in Form einer AC-Spannung bzw. Wechselspannung gestaltete Versorgungsspannung Vin anliegt, die z.B. eine Frequenz von 50 Hz und eine effektive Amplitude von 220 oder 230 V aufweisen kann.

Die Steuereinheit ST umfasst einen steuerbaren Schalter 5. Mit Hilfe dieses Schalters 5 ist die Steuereinheit ST in der Lage, die eingangsseitige Wechselspannung Vin an Ausgänge 6, 7 der Steuereinheit ST weiterzuleiten oder nicht. Der Schalter 5 ist von einer Steuerschaltung SC steuerbar d.h. ein- und ausschaltbar. Der Schalter 5 ist mit dem Phasenleiter L gekoppelt und zwischen dem Eingangsanschluss 3 und dem Ausgangsanschluss 6 der Steuereinheit ST angeordnet. Bei Betätigung d.h. beim Einschalten des Schalters 5 werden der Eingangsanschluss 3 und der Ausgangsanschluss 6 elektrisch überbrückt.

Wenn der Schalter 5 insbesondere leitend geschaltet ist, so liegt am Ausgang 6, 7 die Versorgungsspannung Vin unverändert an. Andererseits ist die Ausgangsspannung V1 der Steuereinheit ST vorzugsweise eine Nullspannung, sobald der Schalter 5 offen ist. Die Versorgungsspannung Vin wird im letzteren Fall von der Steuereinheit ST nicht weitergeleitet.

Die Steuereinheit ST kann insbesondere dazu ausgestaltet sein, einen Phasenanschnitt und/oder Phasenabschnitt der Versorgungsspannung Vin durchzuführen. Der Phasenanschnitt und/oder Phasenabschnitt der Versorgungsspannung Vin wird insbesondere durch den Schalter 5 bzw. durch die Steuerschaltung SC erzeugt.

Fig. 2 zeigt den zeitlichen Verlauf von Spannungswerten innerhalb des Beleuchtungssystems 1. Unter anderem zeigt diese Fig. 2 den Verlauf der Ausgangsspannung V1 der Steuereinheit ST während einer positiven Halbwelle der Versorgungsspannung Vin. Die Abszissenachse bezieht sich auf die Zeit und die Ordinatenachse gibt den Wert der Spannung wieder. In der Ordinatenachse ist insbesondere der normierte Spannungswert der Versorgungsspannung Vin wiedergegeben, d.h. der durch den Maximalwert Vin/max der Versorgungsspannung geteilte Wert der Versorgungsspannung Vin.

Die positive Halbwelle der Versorgungsspannung Vin beginnt zum Zeitpunkt t0 und endet bei t4. Die in Fig. 2 gezeigte Ausgangsspannung V1 wird durch Phasenanschnitt erzeugt, d.h. die sinusförmige Versorgungsspannung Vin wird nach einem Nulldurchgang zunächst auf Null gehalten, bevor sie wieder ihren Wert einnimmt. D.h. zum Zeitpunkt t0, der einem Nulldurchgang der Spannung entspricht, ist der Schalter 5 offen bzw. wird der Schalter 5 von der Steuerschaltung SC geöffnet. Dies führt dazu, dass die Ausgangsspannung V1 auf Null Volt bleibt. Erst zu einem späteren Zeitpunkt t3, der sich vorzugsweise noch in der ersten Hälfte der Halbwelle befindet, wird der Schalter von der Steuereinheit ST leitend geschaltet. Vom Zeitpunkt t3 bis zum Ende der Halbwelle bei t=t4 entspricht die Ausgangsspannung V1 der Versorgungsspannung Vin.

Im Gegenteil dazu wird bei einem Phasenabschnitt die Ausgangsspannung V1 zu Beginn der Halbwelle den Wert der Versorgungsspannung Vin aufweisen und am Ende der Halbwelle den Wert 0 Volt aufweisen. Alternativ kann die Ausgangsspannung V1 einen Phasenanschnitt und einen Phasenabschnitt aufweisen, wobei sie dann zu Beginn und am Ende einer Halbwelle der Versorgungsspannung Vin den Wert 0 Volt aufweist und zwischendrin dem momentanen Wert der Versorgungsspannung Vin entspricht.

Wie in Fig. 1 gezeigt, sind die Ausgangsanschlüsse 6, 7 der Steuereinheit ST über Spannungsversorgungsleitungen 8, 9 mit dem Konverter K verbunden. Der Konverter kann auch allgemein als Betriebsschaltung für das LED-Modul L betrachtet werden.

Die Ausgangsspannung V1 der Steuereinheit ST, die durch Phasenanschnitt und/oder Phasenabschnitt der Versorgungsspannung Vin erzeugt wird, dient zur elektrischen Versorgung des Konverters K und des LED-Moduls L. Der Konverter K umfasst zwei Eingangsanschlüsse bzw. Eingangsklemmen 10, 11 zum Zuführen der Ausgangsspannung V1 der Steuereinheit.

Der Konverter K umfasst eingangsseitig eine Busspannungseinheit PSU, welche mit der Ausgangsspannung V1 versorgt wird und eine Busspannung bzw. Zwischenkreisspannung Vbus erzeugt. Die Busspannungseinheit PSU kann eingangsseitig einen Gleichrichter und/oder einen Filter (nicht gezeigt) aufweisen. Dadurch kann die einen Phasenanschnitt und/oder Phasenabschnitt aufweisenden Versorgungsspannung Vin gleichgerichtet und gegebenenfalls gefiltert werden.

Vorzugsweise wird die Netzspannung nach dem Gleichrichter und/oder Filter noch einer Leistungsfaktorkorrektur-Schaltung (nicht gezeigt) zugeführt, die in bekannter Weise aus der gegebenenfalls gleichgerichteten und/oder gefilterten Spannung eine näherungsweise konstante Busspannung Vbus erzeugt. Die Busspannung Vbus kann dabei eine Restwelligkeit aufweisen.

Alternativ oder zusätzlich zur Leistungsfaktorkorrektur-Schaltung kann die Busspannungseinheit PSU einen Gleichspannungswandler aufweisen, der in bekannter Weise dafür sorgt, dass der Ausgang der Busspannungseinheit PSU eine zumindest näherungsweise konstante Busspannung Vbus ist.

Die Busspannung Vbus wird einem Gleichspannungswandler CS zugeführt, der als Stromquelle für das LED-Modul L dient. Gleichspannungswandler sind an sich bereits bekannt. Beispielsweise kann der Gleichspannungswandler CS als Wandler ohne galvanische Trennung ausgestaltet sein, z.B. als Abwärtswandler. Alternative Topologien als Wandler mit galvanischer Trennung sind für den Gleichspannungswandler CS denkbar, z.B. in Form eines Resonanzwandlers.

Die Ausgangsspannung Vout des Konverters K, d.h. der Ausgang des Gleichspannungswandlers CS, dient zum Betreiben des LED-Moduls L. Das LED-Modul L ist beispielhaft für ein Leuchtmittel, dass an den Konverter K anschließbar ist. Z.B. könnte auch eine Gasentladungslampe vom Konverter K betrieben werden. Bevorzugt dient der Konverter K zum Betreiben von mindestens einer LED. Vorzugsweise kann eine von dem Konverter K betriebene LED-Strecke eine Reihenschaltung von mehreren LEDs aufweisen. Alternativ können auch parallel angeordnete LEDs oder eine Kombination aus parallel und in Serie geschalteten LEDs versorgt werden. Diese mindestens eine LED kann im in Fig. 1 gezeigten LED-Modul L vorgesehen sein. Alternativ können mehrere LED-Module in Serie und/oder in Parallel zueinander an den Konverter K angeschlossen werden.

Erfindungsgemäß ist der Konverter K nunmehr dazu ausgestaltet, die Spannungsversorgungsleitungen 8, 9 mit einem Spannungssignal V2 zu beaufschlagen. Das Spannungssignal V2 wird insbesondere während einer Unterbrechung der Ausgangsspannung V1, d.h. während einer Phasenanschnitts- und/oder Phasenabschnittslücke, beaufschlagt.

Diese Beaufschlagung ist in Fig. 2 gezeigt. Im gezeigten Ausführungsbeispiel weist die Ausgangsspannung V1 der Steuereinheit ST eine Lücke bzw. einen Phasenanschnitt zu Beginn der Halbwelle. Zwischen den Zeitpunkten t0 und t3 ist die Ausgangsspannung V1 entsprechend eine Nullspannung. In dieser Lücke 20 beaufschlagt der Konverter das Spannungssignal V2. Das Spannungssignal V2 ist z.B. in Form eines Rechtecksignals zwischen den Zeitpunkten t1 und t2 dargestellt, wobei t0<t1 und t2<t3. Die Steilheit der Flanken des Spannungssignals V2 kann begrenzt sein, d.h. es kann eine Zeitdauer ΔT dauern, bis das Rechtecksignal von Null auf den konstanten positiven Wert steigt und danach wieder vom positiven Wert auf Null wieder sinkt. Ähnlich kann sich auch beim Anstieg der Ausgangsspannung V1 nach dem Phasenanschnitt eine begrenzte Steilheit ergeben.

Das Spannungssignal V2 kann z.B. durch einen Flyback-Konverter 12 erzeugt werden, der insbesondere durch die Busspannung Vbus gespeist werden kann. Dieser Flyback-Konverter 12 umfasst einen Übertrager T in Form beispielsweise eines Transformators mit einer Primärwicklung N1 und einer Sekundärwicklung N2 auf. Der Übertrager T dient zur Potentialtrennung zwischen einer Primärseite aufweisend die Primärwicklung N1 und einer Sekundärseite aufweisend die Sekundärwicklung N2. Das Spannungssignal V2 wird hier auf der Sekundärseite des Übertragers auf die Spannungsversorgungsleitungen beaufschlagt.

Der Flyback-Konverter 12 umfasst einen steuerbaren Schalter SW1, der in Serie zu der Primärwicklung N1 geschaltet. In bekannter Weise kann durch ein entsprechendes abwechselndes Öffnen und Schließen des Schalters SW1 die von der eingangsseitig am Flyback-Konverter anliegenden Spannung Vbus zur Verfügung gestellte Energie auf die Sekundärseite des Flyback-Konverters 12 übertragen werden. Die Energieübertragung findet dabei im geöffneten Zustand des Schalters SW1 statt, wobei hierzu auf der Ausgangsseite des Flyback-Konverters 3 ferner eine Diode vorgesehen ist.

Die Frequenz und das Tastverhältnis der Ansteuerung des Schalters SW1 bestimmen die Amplitude der Spannung an der Sekundärwicklung N2 bzw. bestimmen das Verhältnis dieser Amplitude zur Busspannung Vbus. Durch gezieltes Ein- und Ausschalten des Schalters SW1 ist der Konverter K somit in der Lage, die Höhe der Amplitude der Spannung an der Sekundärwicklung N2 zu bestimmen.

Der Konverter K umfasst noch zwei weitere Schalter SW2, SW3, um die Spannung an der Sekundärwicklung N2 gezielt auf die Spannungsversorgungsleitungen 8, 9 zu beaufschlagen. Die Serienschaltung aus der Sekundärwicklung N2 und der Diode ist zwischen den zwei Schaltern SW2, SW3 geschaltet. Während die erste Klemme dieser Schalter SW2, SW3 mit der Sekundärwicklung N2 bzw. mit der Diode verbunden ist, ist die zweite Klemme dieser Schalter SW2, SW3 jeweils mit einer der Spannungsversorgungsleitungen 8, 9 verbunden.

Die Schalter SW2, SW3 werden gleichzeitig ein- und ausgeschaltet, um das Spannungssignal V2 selektiv auf die Spannungsversorgungsleitungen 8, 9 zu beaufschlagen. Diese Schalter SW2, SW3 werden von einer Steuerschaltung 15 des Konverters K angesteuert, wobei diese Steuerschaltung 15 insbesondere eine Lücke 20 bzw. einen Phasenanschnitt und/oder Phasenabschnitt der Ausgangsspannung V1 ermitteln bzw. detektieren kann. Die Steuerschaltung 15 kann die Schalter SW2, SW3 derart steuern, dass gezielt in einer Lücke 20 bzw. in einem Phasenanschnitt und/oder Phasenabschnitt das Spannungssignal V2 auf die Spannungsversorgungsleitungen 8, 9 beaufschlagt wird. Der Schalter SW1 wird vorzugsweise ebenfalls von der Steuereinheit 15 des Konverters K gesteuert.

Die Steuereinheit ST ist nunmehr erfindungsgemäß dazu ausgestaltet, die Spannung an den Ausgangsanschlüssen 6, 7 insbesondere in der von ihr verursachten Lücke 20 bzw. Phasenanschnitt und/oder Phasenabschnitt zu beeinflussen. Diese Spannung kann von der Steuereinheit als Information ausgewertet werden.

Vorzugsweise erfasst die Steuereinheit ST die Spannung an den Ausgangsanschlüssen 6, 7 im wesentlichen in der Mitte der Lücke 20, d.h. im wesentlichen zum Zeitpunkt (t1+t2)/2. Der Konverter sorgt vorzugsweise dafür, dass das Spannungssignal V2 auch in der Mitte der Lücke 20 beaufschlagt wird. Wichtig ist dabei eine Art zeitliche Synchronisierung der Steuereinheit ST und des Konverters K, um sicher zu stellen, dass ein beaufschlagtes Spannungssignal V2 auch richtig erfasst wird.

Durch die von der Steuereinheit ST erfasste Spannung während eines Phasenanschnitts und/oder Phasenabschnitts lässt sich ein Binärcode abbilden. Das Referenzzeichen V in Fig. 1 soll hier ein Mittel zur Erfassung der Ausgangsspannung V1 darstellen, wie z.B. einen Spannungsteiler. Wenn z.B. in der Lücke 20 eine positive Spannung V2 erfasst wird, entspricht dies den logischen Wert 1. Erfasst die Steuereinheit ST hingegen in der Lücke 20 eine Nullspannung, so kann sie daraus den logischen Wert 0 interpretieren. Eine umgekehrte Abbildung der Werte 1 und 0 ist natürlich möglich. Durch selektives Beaufschlagen des Spannungssignals V2 in mehreren folgenden Halbwellen der Ausgangsspannung V1 und durch entsprechende Erfassung durch die Steuereinheit ST ist es erfindungsgemäß möglich, Bits bzw. Bitfolgen und somit digitale Information von dem Konverter K hin zur Steuereinheit ST zu übertragen.

Im obigen Ausführungsbeispiel kann der Konverter K entweder das konstante positive Spannungssignal V2 oder die Nullspannung beaufschlagen. Alternativ kann der Konverter selektiv auch ein weiteres konstantes Spannungssignal V3 beaufschlagen, wobei die Amplitudenwerte der Signale V2 und V3 unterschiedlich sein sollten. Somit kann der Konverter K der Steuereinheit ST die logische Information 0, 1 oder 2 übermitteln, wenn jeweils das Spannungssignal 0 Volt, V2 oder V3 beaufschlagt wurde. Der Konverter kann in diesem Sinne noch mehrere unterschiedliche Amplitudenwerte beaufschlagen, wobei dann innerhalb einer Halbwelle mehr Information übermittelt werden kann. Andererseits kann in diesem Fall unter Umständen die korrekte Ermittlung der digitalen Information durch die Steuereinheit erschwert werden.

Vorzugsweise übermittelt der Konverter K eine Information nach einer entsprechenden Abfrage bzw. Polling-Befehl durch die Steuereinheit ST. Hierfür kann z.B. das Vorhandensein eines Phasenanschnitts und/oder Phasenabschnitts in einer Halbwelle der Ausgangsspannung V1 von dem Konverter K als logische 0 bewertet werden. Eine Halbwelle der Ausgangsspannung V1 ohne Lücke 20 bzw. ohne Phasenanschnitt und/oder Phasenabschnitt kann hingegen von dem Konverter K als logische 1 ermittelt werden. Eine umgekehrte Interpretation als jeweils logische 1 und logische 0 ist selbstverständlich möglich. Hierdurch kann die Steuereinheit ST dem Konverter K digitale Daten senden, wie z.B. Befehle, wobei jeder Befehl durch eine bestimmte Bitfolge definiert ist.

Die Steuereinheit kann somit z.B. dem Konverter K einen Befehl zur Übersendung von bestimmten Informationen senden. Dieser Befehl wird insbesondere vom Konverter K durch Messung der Ausgangsspannung V1 in mehreren folgenden Halbwellen ermittelt. Sobald die Steuereinheit ST den Befehl gesendet hat, führt sie in jeder Halbwelle einen Phasenanschnitt und/oder Phasenabschnitt durch, um eine Rückübersendung von Information durch den Konverter K zu ermöglichen. Der Konverter K kann dann die gewünschte Information durch gezielte Beaufschlagung der Spannungsversorgungsleitungen der Steuereinheit ST übermitteln.

Die übermittelte Information kann sich auf den Wert eines elektrischen Parameters des Konverters oder des LED-Moduls - z.B. Strom durch die LEDs - oder auf die Temperatur im Bereich des Konverters beziehen. Alternativ kann der Konverter mit einem beliebigen Sensor (nicht gezeigt) gekoppelt sein, wie z.B. einem Bewegungssensor oder Tageslichtsensor, und bei entsprechender Abfrage durch die Steuereinheit ST einen Messwert dieses Sensors an die Steuereinheit ST übersenden.

Gemäß der Erfindung wird also zwischen einer Steuerschaltung und dem LED-Konverter ein Protokoll bezüglich Eigenschaften des Phasenanschnitts und/oder Phasenabschnitts auf der Ausgangsspannung V1 vereinbart. Die Bitfolge, die sich aus dem Phasenanschnitt und/oder Phasenabschnitt durch die Steuereinheit ST ergibt, wird vom Konverter K nicht etwa in einen Dimmwert umgesetzt. Vielmehr können komplexe Kodierungen der Phasenanschnitts bzw. Phasenanschnitts-Abfolgen als Abfrage-Befehl ausgewertet werden.

Die vorliegende Erfindung ermöglicht es, entsprechende Informationen vom Konverter K zurück zur Steuereinheit ST zu übermitteln. Die Kommunikation zwischen Konverter K und Steuereinheit ST ist bidirektional. Alternativ kann erfindungsgemäß auch vorgesehen sein, dass zumindest eine Daten-Übertragung von dem LED-Konverter hin zu der Steuereinheit ST erfolgt.

Gemäß der Erfindung wird Information von dem Konverter K abgerufen, indem dazu ein entsprechendes Aufrufkommando (polling) kodiert durch Phasenanschnitt bzw. Phasenabschnitt von der Steuereinheit ST zu dem Konverter K gesandt wird.

Für den Rückkanal vom Konverter K zu der Steuereinheit ST nutzt der Konverter K die Zeitdauer t0-t3, in dem die Steuereinheit ST im Sinne eines Phasenanschnitts bzw. Phasenabschnitts die Versorgungsspannung unterbrochen hat. Genauer gesagt moduliert der Konverter K in der Phasenanschnittslücke bzw. Phasenabschnittslücke gemäß einem definierten Protokoll eine Spannung auf die unterbrochene Spannungsversorgungsleitung. Die Steuereinheit ST liest die aufmodulierten Spannungssignale V2 in der Phasenanschnittslücke bzw. Phasenabschnittslücke aus.

Gemäß der vorliegenden Erfindung findet insbesondere kein Aufmodulieren der Ausgangsspannung V1 statt, sondern die Information wird vom Konverter (Slave) an die Steuereinheit (Master) in Zeitdauern zurückübertragen, in denen die Versorgungsspannung völlig weggeschaltet ist.

Gemäß der vorliegenden Erfindung wird vorzugsweise für den Rückwärtskanal vom Konverter zur Steuereinheit während dem Abschalten der Versorgungsspannung durch die Steuereinheit durch eine separate Spannungsversorgung des Konverters eine Information auf die Spannungsversorgungsleitungen aufmoduliert.

Der Vorteil bei der Erfindung ist es auch, dass aufgrund der bei der Steuereinheit unterbrochenen Versorgungsleitung die selektiv vom Konverter K aufgeschaltete Informationsspannung V2 lediglich bis zur Steuereinheit ST gesandt wird, aber aufgrund der Unterbrechung nicht weiter verlaufen kann.

## Patentansprüche

1. Verfahren zur Übertragung von Information von einem Betriebsgerät (K) für Leuchtmittel (L), insbesondere einem Konverter für LEDs, hin zu einer mit dem Betriebsgerät (K) über dessen Spannungsversorgungleitungen (8, 9) verbundenen Steuereinheit (ST),
aufweisend die folgenden Schritte:
- die Steuereinheit (ST) unterbricht vorzugsweise periodisch zeitweise eine AC-Versorgungsspannung (Vin) des Betriebsgeräts (K), und
- das Betriebsgerät (K) beaufschlagt die Spannungsversorgungsleitungen (8, 9) während der Unterbrechung der AC-Versorgungsspannung (Vin) mit einem Spannungssignal (V2), das von der Steuereinheit (ST) als Information ausgewertet wird,
wobei die Informationsübertragung von dem Betriebsgerät (K) zu der Steuereinheit (ST) digital codiert übertragen wird, indem das Betriebsgerät (K) die Spannungsversorgungsleitungen (8, 9) während der Unterbrechung der AC-Versorgungsspannung (Vin) selektiv mit drei diskret verschiedenen Spannungssignalen beaufschlagt.

2. Verfahren nach Anspruch 1,
wobei die Steuereinheit (ST) die Versorgungsspannung (Vin) durch Phasenanschnitt oder Phasenabschnitt unterbricht.

3. Verfahren nach Anspruch 1 oder 2,
bei dem die zeitweise Unterbrechung der AC-Versorgungsspannung (Vin) das Betriebsgerät (K) im Sinne eines Polling-Befehls zur Sendung von Information an die Steuereinheit (ST) interpretiert.

4. Verfahren nach einem der vorhergehenden Ansprüche, bei dem das Betriebsgerät (K) das Beaufschlagen der Spannungsversorgungsleitungen (8, 9) ausgehend von einer DC-Spannung in dem Betriebsgerät (K) ausführt.

5. Verfahren nach einem der vorhergehenden Ansprüche, bei dem das Betriebsgerät (K) das Beaufschlagen der Spannungsversorgungsleitungen (8, 9) unter Verwendung eines galvanisch getrennten Übertragers (T) ausführt, in dem eine Primärseite des Übertragers (T) geschaltet wird und die Sekundärseite des Übetragers (T) mit den Spannungsversorgungsleitungen (8, 9) verbunden ist.

## Claims

1. A method for transmitting information from an operating device (K) for lamps (L), in particular a converter for LEDs, to a control unit (ST) connected to the operating device (K) via voltage supply lines (8, 9), having the following steps:
- The control unit (ST) preferably periodically temporarily interrupts an AC supply voltage (Vin) of the operating device (K), and
- the operating device (K) applies a voltage signal (V2) to the voltage supply lines (8, 9) during the interruption of the AC supply voltage (Vin), which is evaluated by the control unit (ST) as information,
wherein the information transmission from the operating device (K) to the control unit (ST) is transmitted digitally coded, in that the operating device (K) selectively applies three discretely different voltage signals to the voltage supply lines (8, 9) during the interruption of the AC supply voltage (Vin).

2. The method according to Claim 1,
wherein the control unit (ST) interrupts the supply voltage (Vin) by phase control or by phase section.

3. The method according to Claim 1 or 2,
in which the operating device (K) interprets the temporary interruption of the AC supply voltage (Vin) in the sense of a polling command for transmitting information to the control unit (ST).

4. The method according to any one of the preceding claims, in which the operating device (K) carries out the application to the voltage supply lines (8, 9) based on a DC voltage in the operating device (K).

5. The method according to any one of the preceding claims, in which the operating device (K) carries out the application to the voltage supply lines (8, 9) using a galvanically isolated transmitter (T), in which a primary side of the transmitter (T) is connected and the secondary side of the transmitter (T) is connected to the voltage supply lines (8, 9).

## Revendications

1. Procédé de transmission d'informations d'un appareil de commande (K) pour des moyens d'éclairage (L), plus particulièrement un convertisseur pour LED, vers une unité de commande (ST) relié avec l'appareil de commande (K) par l'intermédiaire de ses lignes d'alimentation en tension (8, 9), comprenant les étapes suivantes :
- l'unité de commande (ST) interrompt, de préférence périodiquement, temporairement une tension d'alimentation AC (Vin) de l'appareil de commande (K) et
- l'appareil de commande (K) sollicite les lignes d'alimentation en tension (8, 9) pendant l'interruption de la tension d'alimentation AC (Vin) avec un signal de tension (V2), qui est analysé par l'unité de commande (ST) en tant qu'information,
la transmission d'informations par l'appareil de commande (K) étant transmise de manière codée numériquement vers l'unité de commande (ST), grâce au fait que l'appareil de commande (K) sollicite les lignes d'alimentation en tension (8, 9) pendant l'interruption de la tension d'alimentation AC (Vin) de manière sélective avec trois différents signaux de tension distincts.

2. Procédé selon la revendication 1,
l'unité de commande (ST) interrompant la tension d'alimentation (Vin) par un allumage de phase ou par une coupure de phase.

3. Procédé selon la revendication 1 ou 2,
dans lequel l'appareil de commande (K) interprète l'interruption temporaire de la tension d'alimentation AC (Vin) au sens d'une instruction de polling pour l'envoi d'informations à l'unité de commande (ST).

4. Procédé selon l'une des revendications précédentes, dans lequel l'appareil de commande (K) effectue la sollicitation des lignes d'alimentation en tension (8, 9) à partir d'une tension DC dans l'appareil de commande (K).

5. Procédé selon l'une des revendications précédentes, dans lequel l'appareil de commande (K) effectue la sollicitation des lignes d'alimentation en tension (8, 9) à l'aide d'un transmetteur isolé galvaniquement (T), un côté primaire du transmetteur (T) étant commuté et le côté secondaire du transmetteur (T) étant relié avec les lignes d'alimentation en tension (8, 9).
